# EUROPÄISCHE PATENTSCHRIFT

(11) **EP 0 873 651 B1**
(45) Veröffentlichungstag und Bekanntmachung des Hinweises auf die Patenterteilung: **06.10.1999**
(21) Anmeldenummer: 96946083.1
(22) Anmeldetag: 16.12.1996
(51) Int. Cl.: H04N 5/63, H02M 3/335

(54) **SCHALTNETZTEIL MIT VERLUSTLEISTUNGSARMEM STANDBY-BETRIEB**
SWITCHED-MODE POWER SUPPLY WITH LOW POWER LOSS IN STANDBY OPERATION
ALIMENTATION A DECOUPAGE AVEC MODE ATTENTE A FAIBLE DISSIPATION DE PUISSANCE

(30) Priorität: 12.01.1996 DE 19600962
(43) Veröffentlichungstag der Anmeldung: 28.10.1998
(73) Patentinhaber: SIEMENS AKTIENGESELLSCHAFT, 80333 München (DE)
(72) Erfinder: PRELLER, Peter, D-81243 München (DE)
(86) Internationale Anmeldenummer: DE9602416
(87) Internationale Veröffentlichungsnummer: WO9725815

(56) Entgegenhaltungen:
- EP-A- 0 106 041
- JP-A- 4 035 487
- US-A- 4 481 429
- PATENT ABSTRACTS OF JAPAN vol. 016, no. 215 (E-1204), 20.Mai 1992 & JP 04 035487 A (SONY CORP), 6.Februar 1992,
- PATENT ABSTRACTS OF JAPAN vol. 011, no. 095 (E-492), 25.März 1987 & JP 61 247166 A (SONY CORP), 4.November 1986,
- PATENT ABSTRACTS OF JAPAN vol. 096, no. 003, 29.März 1996 & JP 07 308065 A (RICOH CO LTD), 21.November 1995,

## Beschreibung

Die Erfindung betrifft ein Schaltnetzteil nach dem Oberbegriff des Patentanspruchs 1.

Schaltnetzteile zur Versorgung elektronischer Geräte weisen neben dem Normalbetrieb eine sogenannte Standby-Betriebsart auf, bei der eine im Vergleich zum Normalbetrieb wesentlich geringere Last mit Energie zu versorgen ist. Während des Standby-Betriebs soll die Leistungsaufnahme des Geräts möglichst gering sein. Die Eigenverlustleistung herkömmlicher Schaltnetzteile im Standby-Betrieb ist jedoch im Vergleich zur abgegriffenen Nutzleistung relativ hoch. Der Wirkungsgrad ist dementsprechend niedrig.

JP-A-04 035 487 beschreibt ein Schaltnetzteil, das einen Transformator enthält, der eingangsseitig mit einer gleichgerichteten Spannung taktweise versorgt wird und ausgangsseitig zur Versorgung einer Last dient. Um die Wärmeerzeugung durch den Strombegrenzungswiderstand klein zu halten, ist dieser so geschaltet, daß er nur im Standby-Betrieb stromdurchflossen ist.

Die Aufgabe der Erfindung besteht darin, ein Schaltnetzteil anzugeben, das während der Standby-Betriebsart wenig Verlustleistung verbraucht.

Diese Aufgabe wird erfindungsgemäß durch ein Schaltnetzteil nach den Merkmalen des Patentanspruchs 1 gelöst.

Vorteilhafte Ausgestaltungen und Weiterbildungen der Erfindung sind in den Unteransprüchen angegeben.

Bei der Erfindung wird das Schaltnetzteil während des Standby-Betriebs primärseitig mit einer wesentlich niedrigeren Spannung versorgt als während des Normalbetriebs. Die Aufnahmeleistung nimmt mit dem Quadrat dieses Spannungsverhältnisses ab. Bei einer üblichen Netzspannung von 230 V beträgt die am Glättungskondensator des Schaltnetzteils anliegende zu wandelnde Spannung entsprechend dem Scheitelwert der Wechselspannung etwa 325 V. Im Standby-Betrieb ist eine Reduzierung der Ladespannung des Glättungskondensators auf 12 bis 16 V möglich. Dies entspricht einem Reduktionsfaktor von etwa 20; die Aufnahmeleistung wird dann um den Faktor 400 verringert. An die Aufnahmeleistung gekoppelt nimmt auch in entsprechender Weise die Verlustleistung ab. Diese wird im wesentlichen durch die Schaltverluste im Schalttransistor bewirkt.

Gemäß einer ersten Ausführungsform der Erfindung kann die Niederspannung für den Standby-Betrieb durch eine Phasenanschnittsteuerung erzeugt werden, die derart dimensioniert ist, daß nur im Bereich des Nulldurchgangs der eingangsseitigen Netzwechselspannung von ihr Strom an den Glättungskondensator abgegeben wird. Gemäß einer zweiten Ausführungsform der Erfindung kann die Niederspannung durch kapazitive Spannungsteilung aus der Netzwechselspannung und anschließende Gleichrichtung gewonnen werden. Da während des Standby-Betriebs nur eine geringe Leistung aufgenommen wird, ist eine kapazitive Teilung der Netzwechselspannung möglich. Nach einer dritten Ausführungsform wird die Niederspannung durch einen herkömmlichen Tiefsetzsteller bereitgestellt. Während des Standby-Betriebs wird die Speisung des Glättungskondensators aus der Netzwechselspannung über ein entsprechendes Schaltelement abgeschaltet.

Zur weiteren Einsparung von Verlustleistung ist es vorteilhaft, die durch das Schaltnetzteil sekundärseitig erzeugten Gleichspannungen entsprechend zur primärseitigen Niederspannung abzusenken. Sekundärseitig sind deshalb Schaltungsmaßnahmen vorgesehen, durch die die Versorgungsspannung einer Steuerungseinrichtung, die zur Umschaltung zwischen Standby-Betrieb und Normalbetrieb, beispielsweise ein Fernbedienempfänger, sorgt, während des Standby-Betrieb gestützt wird. In den Ausführungsbeispielen ist dies durch eine Umschalteinrichtung realisiert, durch die die Versorgungsspannung der Steuerungseinrichtung während des Standby-Betrieb auf eine Wicklung umgeschaltet wird, die während des Normalbetriebs zur Versorgung anderer Funktionseinheiten vorgesehen ist und deshalb während des Normalbetriebs eine wesentlich höhere Spannung abgibt als während des Standby-Betriebs. Insgesamt können die beschriebenen Schaltungsmaßnahmen ohne größeren zusätzlichen Bauelementeaufwand mit bisherigen Schaltnetzteilkonzepten kombiniert werden. Die schaltungstechnischen Realisierungen sind insbesondere integrierbar, beispielsweise zusammen mit einer ohnehin zur Regelung des Schaltnetzteils vorhandenen integrierten Regelungsschaltung.

Nachfolgend wird die Erfindung anhand der in den Figuren dargestellten Ausführungsbeispiele näher erläutert. Der Übersichtlichkeit wegen sind nur die in Zusammenhang mit der Erfindung wesentlichen Elemente eines Schaltnetzteils enthalten. Eine konkrete Schaltungsrealisierung ist beispielsweise mit dem integrierten Steuerungsschaltkreis TDA 4605 der Firma Siemens realisierbar, indem deren Außenbeschaltung entsprechend ergänzt wird. Es zeigen:
- Figur 1: ein Prinzipschaltbild eines Schaltnetzteils gemäß der ersten Ausführungsform der Erfindung und
- Figur 2 (a) und (b): die zweite Ausführungsform zur Erzeugung der primärseitigen Niederspannung für den Standby-Betrieb mit zwei Ausführungsvarianten.

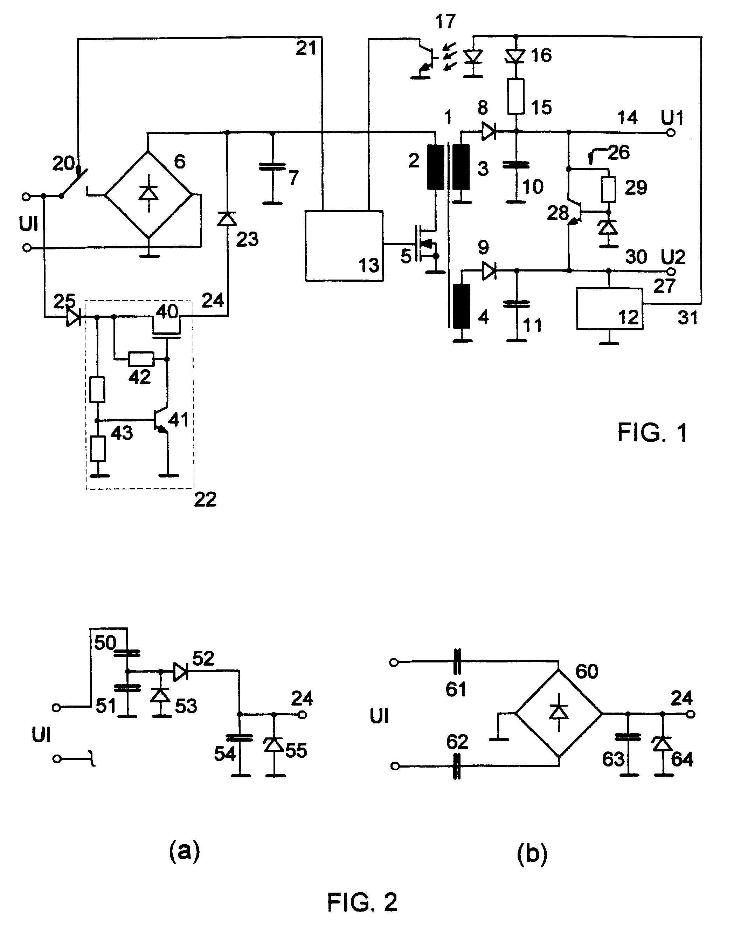

Das Schaltnetzteil nach Figur 1 enthält einen Transformator 1 mit einer Primärwicklung 2, einer ersten Sekundärwicklung 3 und einer zweiten Sekundärwicklung 4. In Reihe zur Primärwicklung 2 ist ein Schalttransistor 5 geschaltet, durch den eine über einen Brückengleichrichter 6 gleichgerichete und mittels eines Glättungskondensators 7 geglättete eingangsseitige Netzwechselspannung UI taktweise an die Primärwicklung 2 anlegbar ist. Auf der Sekundärseite liegt jeweils nach Gleichrichtung mittels Gleichrichterdiode 8 bzw. 9 und Glättungskondensator 10 bzw. 11 eine Gleichspannung U1 bzw. U2 vor. Das Schaltnetzteil dient im Normalbetrieb zur Versorgung eines elektrischen Geräts, beispielsweise eines Fernsehgeräts. Die wesentlichen Funktionseinheiten des Fernsehgeräts werden von der Spannung U1 versorgt, die beispielsweise 150 V beträgt. Die Spannung U2 dient während des Normalbetriebs zur Versorgung einer Steuerungseinrichtung 12. Die Steuerungseinrichtung 12 ist beispielsweise ein Fernbedienempfänger, der auch einen Befehlsdecoder umfaßt. Der Fernbedienempfänger empfängt von einer Fernbedieneinheit abgegebene Impulse, decodiert diese und erzeugt entsprechende Steuersignale. Die Steuerungseinrichtung 12 empfängt insbesondere die Bediensignale für das Umschalten zwischen Standby-Betrieb und Normalbetrieb. Von der Spannung U1 wird ein Regelsignal abgeleitet und an die primärseitige Steuerungseinrichtung 13 rückgekoppelt. Diese steuert die Ein- und Ausschaltphasen des Schaltelements 5, beispielsweise einen Schalttransistor, derart, daß die Ausgangsspannung U1 lastunabhängig konstant ist. Hierzu ist der Anschluß 14 für die Spannung U1 über einen Strombegrenzungswiderstand 15, eine Zenerdiode 16 sowie einen Optokoppler 17 zur Kopplung auf die Primärseite in die Steuerungseinrichtung 13 rückgekoppelt. Die Regelschwelle für die Spannung U1 wird durch die Zenerdiode 16 gebildet, die im beschriebenen Beispiel eine Zenerspannung von 150 V aufweist. Im Standby-Betrieb werden die von der Spannung U1 versorgten Funktionseinheiten abgeschaltet. Sekundärseitig ist im wesentlichen nur noch der Fernbedienempfänger und -decoder 12 mit Energie zu versorgen. Insoweit entspricht das in Figur 1 gezeigte Schaltnetzteil dem Stand der Technik.

Erfindungsgemäß ist für die Umschaltung in den Standby-Betrieb ein Schalter 20 vorgesehen, durch den die Zuführung der Netzwechselspannung zum Brückengleichrichter 6 unterbrochen wird. Der Schalter 20 wird durch ein von der Steuerungseinrichtung 13 auf der Leitung 21 abgegebenes Steuersignal gesteuert. Die Steuerungseinrichtung 13 schaltet die Leitung 21 dann aktiv, wenn Niedriglastbetrieb, das heißt Standby-Betrieb, vorliegt. Der Glättungskondensator 7 wird dann nicht mehr weiter aus dem Brückengleichrichter 7 nachgeladen. Die an ihm anliegende Spannung fällt ab, bis das Nachladen des Glättungskondensators 7 von einer Niederspannungsversorgung 22 übernommen wird. Durch eine Diode 23 wird verhindert, daß der Glättungskondensator 7 durch die Einrichtung 22 im Normalbetrieb entladen wird. Die Einrichtung 22 enthält gemäß dem in Figur 1 dargestellten Ausführungsbeispiel eine Phasenanschnittsteuerung. Durch eine Phasenanschnittsteuerung wird ein Strom bekanntlich nur während einer bestimmten Phase einer Wechselspannung abgegeben. Die Phasenanschnittsteuerung 22 ist derart eingestellt, daß nur zu Phasenabschnitten, die im Bereich des Nulldurchgangs der eingangsseitigen Netzwechselspannung liegen, eine Spannung an ihrem Ausgang 24 zur Verfügung steht, durch die der Kondensator 7 nachgeladen wird, sofern dessen Ladespannung unterhalb der am Anschluß 24 zur Verfügung stehenden Spannung liegt. Der Phasenanschnittsteuerung 22 wird die Netzwechselspannung UI über eine Diode 25 gleichgerichtet zur Verfügung gestellt. Anstelle der in Figur 1 gezeigten Einweggleichrichtung kann auch ein entsprechend aufwendiger Brückengleichrichter vorgesehen werden. In letzterem Fall enthält die aktive Phase der Phasenanschnittsteuerung 22 den Nulldurchgang der Netzwechselspannung UI in ihrer Mitte, im ersteren Fall am Rand der Leitfähigkeitsphase.

Durch die erfindungsgemäße Schaltung wird erreicht, daß während des Standby-Betriebs der Glättungskondensator 7 nur durch die von der Phasenanschnittsteuerung 22 abgegebene Spannung nachgeladen wird. Die Spannung des Glättungskondensators 7 wird dann etwa auf die während eines Leitfähigkeitsabschnitts von Einrichtung 22 abgegebene maximale Spannung aufgeladen. Zweckmäßigerweise wird die Leitfähigkeitsphase der Einrichtung 22 innerhalb einer Sinusschwingung der eingangsseitigen Netzwechselspannung UI beim Erreichen eines Momentanspannungswerts von 12 bis 16 V abgeschaltet. Während des Standby-Betriebs wird die Primärwicklung 2 des Schaltnetzteiltransformators 1 also nur noch mit 12 bis 16 V versorgt. Der durch Primärwicklung 2 und Schalttransistor 5 fließende Primärstrom nimmt (bei im Vergleich zum Normalbetrieb gleichen Schaltzeiten) um den Faktor der Spannungsverringerung ab. Die Aufnahmeleistung nimmt um das Quadrat dieses Faktors ab. Da die Schaltverluste im Schalttransistor 5 wesentlich für die Eigenverlustleistung des Schaltnetzteils im Standby-Betrieb sind, verringert sich die Eigenverlustleistung des Schaltnetzteils entsprechend.

Die Sekundärspannungen U1, U2 sinken entsprechend dem Faktor der primärseitigen Spannungsverringerung ab. Die Spannung U2 reicht nicht mehr aus, die Steuerungseinrichtung 12 ausreichend mit Energie zu versorgen. Die Spannung U2 wird deshalb im Standby-Betrieb von der Spannung U1 gestützt. Hierzu ist ein Umschalter 26 vorgesehen, durch den während des Standby-Betriebs der Anschluß 27 für die Spannung U2 mit dem Anschluß 14 verbunden wird. Vorzugsweise enthält der Umschalter 26 einen Transistor 28, dessen Basis über einen Widerstand 29 mit seinem Kollektor verbunden ist und über eine Zenerdiode 30 mit Sekundärmasse. Sinkt die Spannung U2 am Emitter des Transistors 28 unter die von der Zenerdiode 30 festgelegte Schwelle ab, wird Transistor 28 leitend. Die Spannung U2 wird dann von der Spannung U1 gestützt. Im Normalbetrieb ist die Spannung U2 mindestens so groß, daß der Transistor 28 gerade nicht eingeschaltet wird.

Zur Umschaltung von Normalbetrieb in den Standby-Betrieb wird von der Steuerungseinrichtung 12 an ihrem Ausgang 31 ein Signal erzeugt, das in den Optokoppler 17 eingespeist wird. Das Signal wird dabei der vom Anschluß 14 über Widerstand 15 und Zenerdiode 16 abgeleiteten Regelspannung additiv überlagert. Der Steuerungseinrichtung 13 wird dadurch eine zu hohe, tatsächlich nicht vorliegende Sekundärspannung angezeigt. Die Steuerungseinrichtung 13 enthält ein Zeitglied, vorzugsweise einen Integrierer, der bei längerem Vorliegen dieses Zustands entscheidet, daß auf Standby-Betrieb umgeschaltet wird. Von der Steuerungseinrichtung 13 wird dann das Signal am Anschluß 21 zur Öffnung des Schalters 20 und Abschaltung des Brückengleichrichters 6 aktiviert. Wenn die Emitterspannung von Transistor 28 die Schwellenspannung der Diode 30 unterschreitet, kann die Spannung U2 durch Abfrage der Spannung U1 in der Einrichtung 12 und Erzeugung eines entsprechenden Steuersignals am Ausgang 31 der Steuerungseinrichtung 12 geregelt werden. Zur Umschaltung in den Normalbetrieb wird das Signal am Anschluß 31 abgeschaltet, so daß die Ausgangsspannungen wieder über die Zenerdiode 16 geregelt werden. Die Steuerschaltung 13 fährt dann zunächst an die obere Leistungsgrenze im Niederspannungs-Standby-Betrieb. Wenn nach Überschreiten einer bestimmten in der Steuerungseinrichtung 13 festgestellten Zeitgrenze von der Steuerungseinrichtung 13 die Spannung U1 als unter dem Sollwert liegend festgestellt wird, wird das Signal am Anschluß 21 abgeschaltet und der Schalter 20 wieder geschlossen, so daß das Schaltnetzteil insgesamt in den Normalbetrieb übergeht.

Als Phasenanschnittsteuerung 22 kann jede Steuerung verwendet werden, die die oben angegebene Funktion ausführt. Vorteilhafterweise enthält die Phasenanschnittsteuerung einen MOS-Transistor 40, dessen Drain-Source-Strecke zwischen die Dioden 25, 23 geschaltet ist. Der Gateanschluß des Transistors 40 ist über einen Transistor 41 nach Masse geschaltet. Der Transistor 41 wird an seiner Basis von einem Spannungsteiler 43 angesteuert, durch den die eingangsseitig an der Phasenanschnittsteuerung anliegende Spannung abgefragt wird. An den Gateanschluß des Transistors 40 ist außerdem ein mit der Eingangsseite der Phasenanschnittsteuerung verbundener Pull-up-Widerstand 42 vorgesehen. Wenn die an der Eingangsseite der Phasenanschnittsteuerung anliegende Spannung oberhalb der durch den Transistor 41 gebildeten Schaltschwelle liegt, wird das Gate des Transistors 40 auf Masse gezogen und der Ausgang 24 der Phasenanschnittsteuerung 22 ist abgeschaltet. Reicht die über den Spannungsteiler 43 an der Basis des Transistors 41 anliegende Spannung nicht aus, den Transistor 41 leitend zu steuern, wird der Transistor 40 über den Pull-up-Widerstand 42 leitend gesteuert und gibt die über Diode 25 gleichgerichtete Netzwechselspannung an Anschluß 24 weiter.

Die Erzeugung der primärseitigen Niederspannung für den Standby-Betrieb mittels kapazitiver Spannungsteilung ist in Figur 2 gezeigt. Bei einer ersten Ausführungsalternative gemäß Figur 2 (a) wird ein Anschluß der primärseitigen Wechselspannung UI über einen kapazitiven Spannungsteiler 50, 51 mit Primärmasse verbunden. Der Mittelabgriff des Spannungsteilers 50, 51 wird über Gleichrichterdioden 52, 53 einem Glättungskondensator 54 zugeführt, dessen Ausgangsspannung mit einer Zenerdiode 55 begrenzt wird. Der Abgriff 24 an der Zenerdiode 55 entspricht dem Anschluß 24 in Figur 1 und dient unter Zwischenschaltung der Diode 23 zum Anschluß an den Glättungskondensator 7. Eine mit den Elementen 50 bis 53 gleichartig aufgebaute Schaltung kann auch für den anderen Anschluß der Wechselspannung zur Einkopplung in den Kondensator 54 vorgesehen werden.

Nach einer anderen Realisierungsalternative des zweiten Ausführungsbeispiels ist gemäß Figur 2 (b) ein Brückengleichrichter 60 vorgesehen, dessen Wechselspannungsanschlüsse über je einen Kondensator 61, 62 mit den Anschlüssen für die primärseitige Wechselspannung UI verbunden sind. Am Ausgang des Brückengleichrichters 60 ist wiederum ein Glättungskondensator 63 sowie eine spannungsbegrenzende Zenerdiode 64 angeordnet, an der der Anschluß 24 abgegriffen wird. Die Kondensatoren 50, 51 bzw. 61, 62 sind als sogenannte X-Kondensatoren realisiert, die ansonsten zur Entstörung und Filterung von Rückwirkungen der Schaltfrequenz des Schaltnetzteils in das Stromnetz verwendet werden.

Anstelle der Phasenanschnittsteuerung 22 oder der in Figur 2 gezeigten kapazitiven Spannungsteilung kann zur Erzeugung einer Niederspannung am Anschluß 24 auch ein sogenannter Tiefsetzsteller verwendet werden. Ein Tiefsetzsteller erzeugt aus der eingangsseitigen Netzwechselspannung UI durch taktweises Anlegen dieser Spannung an ein induktives Element und anschließende Glättung eine verringerte Spannung. Ein Prinzipschaltbild zur Realisierung eines Tiefsetzstellers ist beispielsweise in der Literaturstelle Tietze, Schenk: "Halbleiterschaltungstechnik, 9. Auflage, 1991, Seite 563, Abbildung 18, 34 und Seite 564, Abb. 18, 37 beschrieben.

## Patentansprüche

1. Schaltnetzteil enthaltend einen Transformator (1), der eingangsseitig mit einer gleichgerichteten Spannung taktweise versorgt wird und ausgangsseitig zur Versorgung einer Last dient,
**gekennzeichnet durch**
Mittel (20...25; 50...55; 61...64), durch die die gleichgerichtete Spannung aus einer Wechselspannung (UI) derart erzeugt wird, daß sie in einem ersten Betriebszustand für hohe vom Transformator (1) zu versorgende Last einen ersten Wert aufweist und in einem zweiten Betriebszustand für niedrige vom Transformator (1) zu versorgende Last einen zweiten, niedrigeren Wert aufweist.

2. Schaltnetzteil nach Anspruch 1,
**gekennzeichnet durch**
Mittel (22...25, 40...43), durch die während des zweiten Betriebszustands nur während ersten Phasenabschnitten, die den Spannungsnulldurchgang der Wechselspannung (UI) enthalten, ein die gleichgerichtete Spannung bereitstellender Glättungskondensator (7) geladen wird, und während zweiten Phasenabschnitten nicht geladen wird.

3. Schaltnetzteil nach Anspruch 1 oder 2,
**dadurch gekennzeichnet,** daß
ein erster Gleichrichter (6) vorgesehen ist, der eingangsseitig über Schaltmittel (20) mit Anschlüssen für die Wechselspannung (UI) verbunden ist und ausgangsseitig mit dem Glättungskondensator (7), und daß der Glättungskondensator (7) über einen zweiten Pfad, der einen zweiten Gleichrichter (25) und eine Phasenanschnittsteuerung (22, 40...43) enthält, mit den Anschlüssen für die Wechselspannung (UI) verbunden ist und daß die Schaltmittel (20) von einem den Betriebszustand angebenden Signal (21) gesteuert werden.

4. Schaltnetzteil nach Anspruch 1,
**dadurch gekennzeichnet,** daß
ein erster Gleichrichter (6) vorgesehen ist, der eingangsseitig über Schaltmittel (20) mit Anschlüssen für die Wechselspannung (UI) verbunden ist, und ein zweiter Gleichrichter (52, 53; 60), der eingangsseitig über Mittel zur kapazitiven Spannungsteilung (50, 51; 61, 62) mit den Anschlüssen für die Wechselspannung (UI) verbunden ist, daß die Gleichrichter ausgangsseitig mit dem Glättungskondensator (7) verbunden sind und daß die Schaltmittel (20) von einem den Betriebszustand angebenden Signal (21) gesteuert werden.

5. Schaltnetzteil nach Anspruch 4,
**dadurch gekennzeichnet,** daß
der zweite Gleichrichter ein Brückengleichrichter (60) ist, dessen Wechselspannungsanschlüsse über je einen Kondensator (61, 62) von der Wechselspannung (UI) gespeist werden.

6. Schaltnetzteil nach einem der Ansprüche 1 bis 5,
**dadurch gekennzeichnet,** daß
der Transformator (1) eine erste Sekundärwicklung (3) aufweist, an die die Last anschließbar ist, und eine zweite Sekundärwicklung (4), von der während des ersten Betriebszustands eine Steuerungseinrichtung (12) versorgt wird, daß durch die Steuerungseinrichtung (12) in Abhängigkeit von der zu versorgenden Last eine Umschaltung zwischen den Betriebszuständen steuerbar ist, und daß eine Umschalteinrichtung (26) vorgesehen ist, durch die die Spannungsversorgung der Steuerungseinrichtung (12) während des zweiten Betriebszustands auf die erste Sekundärwicklung (3) umgeschaltet wird.

7. Schaltnetzteil nach Anspruch 6,
**dadurch gekennzeichnet,** daß
die Steuerungseinrichtung (12) einen Empfänger und Befehlsdekoder für eine Fernbedienung umfaßt.

8. Schaltnetzteil nach Anspruch 6 oder 7,
**dadurch gekennzeichnet,** daß
von einer der Sekundärwicklungen (3, 4) ein an die im ersten Betriebszustand zu regelnde Ausgangsspannung gekoppeltes Regelsignal abgegriffen wird, und daß von der Steuerungseinrichtung (12) zur Umschaltung in den zweiten Betriebszustand ein Signal erzeugt wird, das dem Regelsignal additiv überlagert wird.

## Claims

1. Switched-mode power supply containing a transformer (1), which is cyclically supplied with a rectified voltage on the input side and, on the output side, serves for supplying a load,
characterized by
means (20...25; 50...55; 61...64), by which the rectified voltage is generated from an AC voltage (UI) in such a way that it has a first value in a first operating state for high load to be supplied by the transformer (1) and has a second, lower value in a second operating state for low load to be supplied by the transformer (1).

2. Switched-mode power supply according to Claim 1,
characterized by
means (22...25, 40...43), by which a smoothing capacitor (7), which provides the rectified voltage, is charged only during first phase portions which contain the voltage zero crossing of the AC voltage (UI) during the second operating state, and is not charged during second phase portions.

3. Switched-mode power supply according to Claim 1 or 2,
characterized in that
a first rectifier (6) is provided which, on the input side, is connected via switching means (20) to terminals for the AC voltage (UI) and, on the output side, to the smoothing capacitor (7), and in that the smoothing capacitor (7) is connected to the terminals for the AC voltage (UI) via a second path containing a second rectifier (25) and a phase gating control arrangement (22, 40...43), and in that the switching means (20) are controlled by a signal (21) which indicates the operating state.

4. Switched-mode power supply according to Claim 1,
characterized in that
a first rectifier (6) is provided which, on the input side, is connected via switching means (20) to terminals for the AC voltage (UI), and a second rectifier (52, 53; 60) which, on the input side, is connected via means for capacitive voltage division (50, 51; 61, 62) to the terminals for the AC voltage (UI), in that the rectifiers are connected to the smoothing capacitor (7) on the output side, and in that the switching means (20) are controlled by a signal (21) which indicates the operating state.

5. Switched-mode power supply according to Claim 4,
characterized in that
the second rectifier is a bridge rectifier (60), the AC voltage terminals of which are fed by the AC voltage (UI) via a respective capacitor (61, 62).

6. Switched-mode power supply according to one of Claims 1 to 5,
characterized in that
the transformer (1) has a first secondary winding (3), to which the load can be connected, and a second secondary winding (4), by which a control device (12) is supplied during the first operating state, in that a changeover between the operating states can be controlled by the control device (12) as a function of the load to be supplied, and in that a changeover device (26) is provided by which the voltage supply of the control device (12) is switched over to the first secondary winding (3) during the second operating state.

7. Switched-mode power supply according to Claim 6,
characterized in that
the control device (12) comprises a receiver and command decoder for a remote control.

8. Switched-mode power supply according to Claim 6 or 7,
characterized in that
a regulating signal coupled to the output voltage to be regulated in the first operating state is tapped off from one of the secondary windings (3, 4), and in that a signal is generated by the control device (12) for the changeover to the second operating state, which signal is additively superposed on the regulating signal.

## Revendications

1. Bloc d'alimentation à découpage contenant un transformateur (1), qui est alimenté, de manière cadencée, du côté entrée par une tension redressée et qui sert, du côté sortie, à l'alimentation d'une charge,
caractérisé par des moyens (20 à 25 ; 50 à 55 ; 61 à 64) par lesquels la tension redressée est produite à partir d'une tension alternative (UI) de telle manière qu'elle présente, dans un premier état de fonctionnement, pour une charge élevée à alimenter à partir du transformateur (1), une première valeur et qu'elle présente, dans un second état de fonctionnement, pour une charge faible à alimenter à partir du transformateur (1), une seconde valeur plus basse.

2. Bloc d'alimentation à découpage selon la revendication 1,
caractérisé par des moyens (22 à 25, 40 à 43) par lesquels, pendant le second état de fonctionnement, uniquement pendant des premières parties de phase, qui contiennent le passage par zéro de la tension alternative (UI), est chargé un condensateur de filtrage (7) mettant à disposition la tension redressée et ce condensateur n'étant pas chargé pendant des secondes parties de phase.

3. Bloc d'alimentation à découpage selon la revendication 1 ou 2,
caractérisé par le fait qu'il est prévu un premier redresseur (6) qui est relié, du côté entrée par l'intermédiaire de moyens de commutation (20), à des connexions pour la tension alternative (UI) et qui est relié, du côté sortie, au condensateur de filtrage (7), et que le condensateur de filtrage (7) est relié, par l'intermédiaire d'un deuxième chemin, qui comporte un second redresseur (25) et une commande de réglage de phase (22, 40 à 43), aux connexions pour la tension alternative (UI), et que les moyens de commutation (20) sont commandés à partir d'un signal (21) indiquant l'état de fonctionnement.

4. Bloc d'alimentation à découpage selon la revendication 1,
caractérisé par le fait qu'il est prévu un premier redresseur (6) qui est relié, du côté entrée par l'intermédiaire de moyens de commutation (20), à des connexions pour la tension alternative (UI), et un second redresseur (52, 53 ; 60) qui est relié, du côté entrée par l'intermédiaire de moyens (50, 51 ; 61, 62) servant à une division capacitive de la tension, aux connexions pour la tension alternative (UI), que les redresseurs sont reliés, du côté sortie, au condensateur de filtrage (7), et que les moyens de commutation (20) sont commandés par un signal (21) indiquant l'état de fonctionnement.

5. Bloc d'alimentation à découpage selon la revendication 4,
caractérisé par le fait que le second redresseur est un redresseur en pont (60), dont les connexions à tension alternative sont alimentées chaque fois par l'intermédiaire d'un condensateur (61, 62) à partir de la tension alternative (UI).

6. Bloc d'alimentation à découpage selon l'une des revendications 1 à 5,
caractérisé par le fait que le transformateur (1) présente un premier enroulement secondaire (3), auquel peut être raccordée la charge, et un second enroulement secondaire (4) à partir duquel est alimenté, pendant le premier état de fonctionnement, un dispositif de commande (12), qu'une commutation entre les états de fonctionnement peut être commandée par le dispositif de commande (12) en fonction de la charge à alimenter, et qu'un dispositif de commutation (26) est prévu, par lequel, pendant le second état de fonctionnement, l'alimentation en tension du dispositif de commande (12) est permutée sur le premier enroulement secondaire (3).

7. Bloc d'alimentation à découpage selon la revendication 6,
caractérisé par le fait que le dispositif de commande (12) comprend un récepteur et un décodeur d'instructions pour une commande à distance.

8. Bloc d'alimentation à découpage selon la revendication 6 ou 7,
caractérisé par le fait qu'un signal de régulation, associé à la tension de sortie à réguler dans le premier état de fonctionnement, est prélevé à partir de l'un des enroulements secondaires (3, 4), et qu'un signal est émis par le dispositif de commande (12) pour le passage au second état de fonctionnement, ce signal étant superposé de manière additive au signal de régulation.
